Europäisches Patentamt

European Patent Office

Office européen des brevets

(11) Publication number: **0 193 511 B1**

# EUROPEAN PATENT SPECIFICATION

(45) Date of publication of patent specification: **27.02.91**

(51) Int. Cl.5: **B01J 19/28**, B01J 15/00, //C10G49/00,C10G11/00

(21) Application number: **86850071.1**

(22) Date of filing: **26.02.86**

(54) **A catalytic reactor and a method of carrying out a catalysed reaction.**

(30) Priority: **01.03.85 SE 8501002**

(43) Date of publication of application:
**03.09.86 Bulletin 86/36**

(45) Publication of the grant of the patent:
**27.02.91 Bulletin 91/09**

(84) Designated Contracting States:
**AT BE CH DE FR GB IT LI LU NL SE**

(56) References cited:
**EP-A- 0 040 668**
**EP-A- 0 153 911**
**DE-A- 2 364 678**
**DE-A- 2 729 345**

(73) Proprietor: **Eka Nobel Aktiebolag**

**S-445 01 Surte(SE)**

(72) Inventor: **Vannerberg, Nils Gösta**
**Vallhamnsgatan 8**
**S-421 66 V. Frölunda(SE)**
Inventor: **Järas, Sven Gunnar**
**Korngangen 9**
**S-442 39 Kungälv(SE)**
Inventor: **Andersson, Erik Sören**
**Kronhusgatan 12**
**S-411 05 Göteborg(SE)**
Inventor: **Johansson, Kerstin Elisabet**
**Askims Stationsväg 33**
**S-436 00 Askim(SE)**
Inventor: **Larsson, Tomas Hans Rune**
**Eklandagatan 92**
**S-412 61 Göteborg(SE)**

(74) Representative: **Schöld, Zaid**
**Nobel Industries Sweden AB Patent Department Box 11554**
**S-100 61 Stockholm(SE)**

## Description

The present invention relates to a catalytic cracking reactor and a method of carrying out catalytic cracking.

In the refining of heavy oils to different fuels, such as gasoline and diesel, use is made of catalytic processes, for example catalytic hydrogen processing or hydrotreating and catalytic cracking. For such reactions, different types of reactors have been used. A usual reactor type operates with a stationary catalyst bed through which the raw material feed is conducted in an upward and downstream direction. In other cases, catalyst particles have been taken along by the raw material feed in the reactor, the catalyst particles being separated from the processed flow of material and recycled to the reactor. In other instances, a fluidised bed process is used, in which the catalyst particles form a fluidised bed in the reactor through which the raw material feed is conducted in an upstream direction. This last-mentioned technique is usually called FCC cracking, when utilised for cracking purposes. For exhaust emission control and other catalysed reactions, use has been made also of catalysts having supports in the form of a honeycomb-like body with through passages in which the catalytically active substance or substances are deposited to come into contact with the material flow when the catalyst is used. In catalytic exhaust emission control, the material flow thus is caused to flow longitudinally through the said catalyst body which is stationary and enclosed in a suitable reactor chamber. As regards reaction processes operating with a stationary bed and also with movable beds in the form of fluidised beds, the catalyst must be regenerated from time to time in order to remove therefrom different types of impurities, such as coke and other substances. To this end, the catalyst material is treated with, for example, an oxidising gas to burn off the deposited carbon or coke material. The total process in the catalytic treatment of sundry material flows therefore comprises processing periods, flushing periods, regenerating periods, and renewed flushing periods before the catalyst is again utilised for the purpose intended. Similar difficulties exist in the purification of flue gases to remove, for example, sulphur dioxide. The need for different types of treatments of the catalyst has, in prior art processes, usually resulted in a series of different reactors between which the different flows of material and medium supplied have been shifted, such that the desired sequence of the processing, flushing, renerating and flushing cycles was obtained. Since catalysts for, for example, catalytic hydrotreating or cracking of heavy oils are expensive, and since large amounts of catalyst are required in view of the large flows of material, the provision of separate catalytic reactors, each provided with one set of catalyst material, will be expensive.

One object of the present invention is to provide a novel type of catalytic reactor and a more economic catalytic process which obviates the need for reactor sets and still satisfies the requirements placed on the flushing, regenerating and processing cycles.

This and other objects of the invention are achieved by means of a catalyst of the type defined in the main claim and having the characteristic features stated therein. The same and other objects are achieved also by utilising the method stated in claim 5. Claims 2-4 and 6-8 state preferred embodiments of the invention.

In a catalytic reactor and a catalytic process according to the invention, relative rotation is established between a honeycomb-like catalyst body and supply and removal means for flushing and/or regenerating medium flows and for the flow of material to be subjected to a catalysed reaction. In this manner, the different parts of the honeycomb-like body will be successively exposed to the different flows during each rotation. By adapting the rotational speed, the sector extent and the gas throughflow rate for each individual zone for the flows of flushing medium, regenerating medium and material, the exposure time of the catalyst to the different flows can be optimised for a given catalytic process.

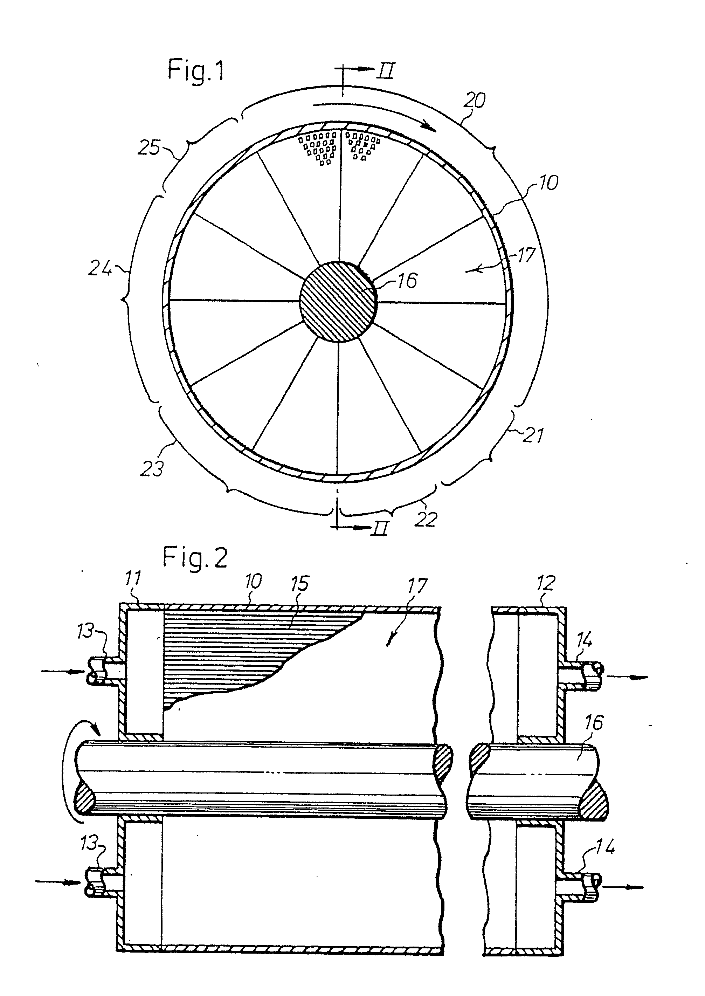

The invention will be described in more detail below, reference being had to the accompanying drawing. Fig. 1 is a schematic cross-sectional view of a reactor according to the present invention. Fig. 2 is a sectional view along the line II-II in Fig. 1.

The reactor according to the invention comprises a casing 10 which is tubular and fixedly mounted. At the casing ends, end caps 10, 12 are divided into sectors, as indicated by the radial lines in Fig. 1. In the embodiment illustrated, the sectors have the same extent, but could just as well have different extents, depending upon the contemplated use. The end cap 11 serves as an inlet for different flows of material and are provided with feed sockets 13. Similarly, the cap 12 serves as an outlet cap and is provided with outlet sockets 14. A monolithic body 17 having honeycomb structure and a large number of through passages 15 extending axially through said body, is inserted in the tubular reactor. The body is mounted on a shaft 16 rotatably mounted in bearings (not shown) and extending through the end caps 11, 12. Alternatively, the monolithic body 17 may be fixedly mounted, and the terminal cap 11 may be rotatable so that it directs the flows of supplied material against successive zones of the body 17.

Fig. 1 indicates a possibility of dividing the reactor into different zones for different types of processing. Thus, the zone 20 may comprise for example five sectors and constitute the actual processing part of the reactor in which the raw material flow is conducted axially through the reactor for processing. The zone 21 may be supplied with, for example, oxygen gas to burn off coke residues formed by the zone 20. The zone 22 may be used for example for flushing the catalyst body with nitrogen gas. The zone 23 may be used for the supply of a different raw material, such as gas oil, while the zones 24 may be used for so-called steam stripping. The zone 25 may then be used for further processing involving, for example, the removal of metal impurities, such a vanadium and nickel. Upon rotation of the shaft 16, the catalyst body 17, because it is fixedly mounted on the shaft, will be successively moved past the different zones 20-25, such that each individual part of the catalyst body and the catalyst material deposited therein will pass through all zones for the different processing and reaction cycles.

The reactor according to the invention may be of optional size, provided that monolithic catalyst supports of honeycomb structure are available. Thus, it is possible to produce such monolithic structures having a length of, for example, 2 m and a diameter of 6 m, it being possible to work with a material flow rate of, for example, 1 m/s. The rotational speed of the body in the reactor may be, for example, 1/3 revolution/min. A great advantage of this reactor type is its simple construction and the great possibilities it affords in controlling the reaction and processing cycles. The reactor may be used for all types of flue gas and raw material flows, also so-called residual oils. In the passages of the honeycomb body, different types of catalysts may be deposited, in accordance with the desired type of processing. Thus, the catalyst material may effect cracking, hydrogenation, disproportionation, desulphurisation etc.

The material flow through the different zones 20-25 need not be in the same direction, and it is possible to conduct for example flushing in a countercurrent flow. It is also possible to provide for heat exchange between the different liquid flows, in which case the catalyst body serves as a heat exchanger. In this case, it is possible to utilise e.g. the flushing medium as heat exchanging medium in order to lower or raise the temperature of the material which is being processed in the catalyst and flows through adjacent zones.

The honeycombe-like support body may be impregnated in conventional manner, but impregnation may also take place in accordance with the published Swedish patent application 8402916-4 (EP-A-153911), if one wishes to use the catalytic reactor for exhaust emission control when large gas quantities are to be processed.

When the reactor according to the invention is to be used for, for example, cracking, the passages of the honeycomb structure may be coated with an $Al_2O_3$ or $Al_2O_3$-$SiO_2$ slurry containing zeolite material (ReY, US-Y) and, for example, platinum to accelerate CO oxidation, thereby to effect cracking. This implies a completely new type of cracker design. By conducting the flows through the different zones 20-25 of the catalyst body at different flow rates, the contact time during cracking can be varied more accurately, without detracting from the cracking activity. In this manner, it is easier to vary the contact time then in a conventional heat-balanced cracking catalyst system.

Laboratory tests have been conducted, utilising a catalyst body formed of cordierite and having a length of 4 cm and a diameter of 1.5 cm. A catalyst body having a length of 5 cm and a diameter of 1.5 cm has also been tested.

In these tests, which were in the form of preliminary studies, the catalyst body or the means for supplying the different flows were not rotated because the tests had to be carried out in a so-called MAT reactor, i.e. a laboratory apparatus familiar to experts and described in literature, for microactivity testing of catalysts in the processing of petroleum oils, for example, FCC catalysts. The catalyst test body coated with catalyst material was mounted centrally in the reaction zone of the MAT reactor, the said zone having a length of 33.3 cm and an inner diameter of 1.5 cm. The body rested on a compacted layer of quartz glass wool which in turn was supported by a mesh carried by spacer members. An about 1 cm thick compacted quartz glass layer was placed on the upper end, the inlet end, of the catalyst test body, and on top of this layer a 3.5 cm thick bed of glass spheres was placed in order to distribute the supplied flows of material as uniformly as possible across the different through passages of the catalyst test body. The supply tube for the different material flows opened about 0.5 cm above the glass sphere bed, while a thermocouple for temperature measurement was in engagement with said glass sphere bed.

EXAMPLE 1

In this Example, use was made of a monolithic cylindrical cordierite body having a length of 4 cm and a diameter of 1.5 cm. The body had a bulk of 2.615 g and square longitudinal passages in a number of 62 passages/cm², the wall thickness between the passages being 0.18 mm and the throughflow area 74% of the total cross-sectional area.

This monolithic body had been coated with a slurry of 50% zeolite material ReY and 50% prepeptised $Al_2O_3$ milled to a particle size of about 5 μm. Zeolite and aluminium oxide have been mixed in a ratio based upon dry substance. The zeolite ReY (12% $Re_2O_3$, based upon dry zeolite) had been produced by ion exchange of a synthetically prepared NaY zeolite with a $ReCl_3$ solution (saturated in respect of $Re_2O_3$) from Rhône-Poulenc. The aluminium oxide was "DISPURAL" purchased from Condea. The slurry used for coating the monolithic body had a dry content of 46%.

The slurry had been poured over the support, and after the excess material had been blown off by compressed air, the body was dried at 125°C for 2 h and again coated. This processing stage was repeated six times, after which the monolithic body had been given a coating which constituted 36.2% by weight of the bulk and had a thickness of about 60 μm. The body was then calcined at 650°C for 3 h and steamed at 150°C for 4 h.

The catalyst was tested in a MAT reactor of the above-mentioned type, and 1.3 g vacuum distilled gas oil having a temperature of 60°C was pumped at a flow rate of 3.9 ml/min for 75 s through the catalyst body which had been placed in the reactor and heated to 500°C. By means of the glass spheres and the quartz wool layers, a uniform flow, "plug flow", through the catalyst body was established. The cracked product flow was conducted through a cold trap (-22°C) in which liquid product was collected for later analysis according to gas chromatography technique. Products that were gaseous at -22°C were collected in an evacuated gas tank and also analysed according to gas chromatography technique.

The catalyst body was then regenerated by means of an air flow of about 4 ml/min at 500°C for 25 min, which implies that the catalyst body was subjected to a regeneration period 20 times longer than the reaction period. In order to provide such a sojourn time which is 20 times longer in the regeneration part than in the reaction part upon rotation of the catalyst body, a sector must be utilised which amounts to 95% of the total circumference of the regeneration part and 5% of the reaction part, which means a rotational speed of 0.038 rpm under the above-mentioned conditions. The amount of oxidised coke was measured. The Table below indicates the results of the first test with this monolithic catalyst body as catalyst body 1a.

A second reaction/regeneration was then carried out with the same catalyst, and the results of this second reaction/regeneration cycle have been indicated as catalyst body 1b.

EXAMPLE 2

A cylindrical monolithic catalyst body having a length of 5 cm, a bulk of 3.3 g, and a diameter of 1.5 cm, was coated in the same manner as in Example 1 with active catalyst material in an amount of 28.4% by weight, based on the bulk of the coated catalyst body. In this instance, however, the catalyst body was calcined at 650°C for 2 h between the third and fourth impregnation cycle. Furthermore, only four impregnations were carried out instead of six impregnations, as in Example 1. The resulting catalyst body was tested in the same manner as in Example 1. The first reaction/regeneration cycle is indicated as catalyst 2a, while the second and third reaction/regeneration cycles are indicated as catalysts 2b and 2c, respectively.

EXAMPLE 3

This Example is intended to show that the reactor and the method according to the present invention may be used also for the purification of flue gases from, for example, $SO_2$. $SO_2$ is adsorbed by $La_2O_2SO_4$ and, with oxygen gas, gives $La_2(SO_4)_3$ according to reaction formula 1 below (La is here used as RE). Reaction occurs at 600°C. Regeneration is accomplished by $H_2S$ treatment, which gives elementary sulphur and water according to reaction formula 2, below.

$La_2O_2SO_4 + 2SO_2 + O_2 \rightarrow La_2(SO_4)_3$ (1)
$La_2(SO_4)_3 + 6H_2S \rightarrow La_2O_2SO_4 + 4S_2 + 6H_2O$ (2)

If a different reducing agent is used, which is possible, reaction formula 2 will be different.

A laboratory test was conducted with a catalyst body made of cordierite and having a length of 5 cm and a diameter of 1.5 cm. The catalyst body consisted of a honeycomb-like support impregnated with a catalyst slurry in the manner stated in Example 1, such that the catalyst body contained 0.1 g $La_2O_2SO_4$ uniformly distributed across the available surface. Otherwise, the catalyst body had the same structure as in Example 1.

The cordierite body was placed in a throughflow reactor through which an air flow of about 10 ml/s, mixed with $SO_2$, was conducted. The $SO_2$ concentration of the air before the reactor was 0.15%. After 3 min, adsorption was complete because the $SO_2$ concentration after the reactor body was 0%. Adsorption was now discontinued, and the catalyst was regenerated by conducting a gas flow of 1% $H_2S$ in $N_2$ at a flow rate of 10 ml/s for 6 min through the body. During adsorption and regeneration, the temperature was 600°C. The adsorption and regeneration cycle was repeated 6 times, and the result was the same every time.

| Catalyst body No. | Length cm | Amount of coating | | Number of impregnations | Decoking | Conversion % | Conversion %/g cat. | Gas % | Coke % | Gas oil % | Light cycle oil % | Coke number | WHSV kg oil / kg cat.h |
|---|---|---|---|---|---|---|---|---|---|---|---|---|---|
| | | g | % | | | | | | | | | | |
| 1a | 4 | 0.842 | 24.4 | 6 | - | 38.2 | 45.4 | 8.6 | 2.5 | 27.1 | 13.7 | 2.6 | 68 |
| 1b | 4 | 0.602 | 18.7 | - | yes | 30.4 | 50.5 | 7.4 | 0.7 | 22.4 | 13.6 | 0.77 | 99 |
| 2a | 5 | 1.312 | 28.4 | 3+1* | - | 23.2 | 17.7 | 4.9 | 0.5 | 17.8 | 11.3 | 0.60 | 49 |
| 2b | 5 | 1.305 | 28.3 | - | yes | 24.5 | 18.8 | 4.9 | 0.6 | 19.0 | 11.7 | 0.70 | 48 |
| 2c | 5 | 1.305 | 28.3 | - | yes | 27.9 | 21.4 | 6.6 | 0.5 | 20.8 | 12.1 | 0.72 | 46 |

*intermediate calcining

## Claims

1. A catalytic cracking reactor with a catalyst comprising a support and one or more catalytically active substances to effect cracking, the support is in the form of a honeycomb-like body (17) with through passages (15) in which the catalytically active substance or substances are deposited to come into contact, upon use of the reactor, with a material flow to be subjected to cracking, the reactor has feed and withdrawal passages (13,14) for flushing and regenerating medium flows and for the material flow, and means (11,12) for directing said medium and material flows through different parts of the honeycomb-like body (17) and cyclically shifting these flows between the different parts of said honeycomb-like body.

2. A catalytic reactor as claimed in claim 1, **characterised** in that said honeycomb-like body (17) is rotatably mounted for successive or stepwise rotation about a rotational axis (16) substantially parallel to said through passages (15) for aligning said passages successively or stepwise with the different feed and withdrawal passages (11-14) for said flushing an regenerating medium flows and for said material flow.

3. A reactor as claimed in claim 1, 2, or 3, **characterised** in that said feed and withdrawal passages (11, 12) are approximately sector shaped and disposed around said rotational axis (16).

4. A reactor as claimed in claim 1, 2, or 3, **characterised** in that the catalytically active substances are deposited on the inner walls of said through passages (15) by slip coating technique.

5. A method of subjecting a material flow to catalytic cracking, in which method the cracking is performed by using a catalytic reactor with a catalyst comprising one or more catalytically active substances to effect cracking, and a support in the form of a honeycomb-like body (17) with through passages (15) in which the catalytically active substances are deposited to come into contact with said material flow during use of the reactor, said flushing and regenerating medium flows and said material flow are directed through different parts of said honeycomb-like body (17) and cyclically shifted between the different parts of said honeycomb-like body (17).

6. A method as claimed in claim 5, **characterised** in that said honeycomb-like body (17) is rotated successively or by steps about a rotational axis (16) substantially parallel to the through passages (15) of said body, for aligning said passages successively or stepwise with feed and withdrawal passages (11,12) for said flushing and regenerating medium flows and for said material flow.

7. A method as claimed in claim 5 or 6, **characterised** in that said feed and withdrawal passages (11, 12) are formed approximately sector-shaped and disposed about said rotational axis (16).

8. A method as claimed in claim 5, 6, or 7, **characterised** in that the catalytically active substances are deposited on the inner walls of said through passages (15) by slip coating technique.

## Revendications

1. Un réacteur de craquage catalytique avec un catalyseur comprenant un support et une ou plusieurs substances catalytiquement actives pour réaliser le craquage , le support est sous forme d'une structure en nids d'abeilles (17) avec des passages de part en part (15) dans lesquels la substance ou les substances catalytiquement actives sont déposées pour venir au contact , lors de l'utilisation du réacteur , d'un écoulement de matière qui doit être soumise au craquage , le réacteur possède des passages d'alimentation et d'évacuation (13,14) pour des écoulements de milieux de purge et de régénération et pour l'écoulement de matière , et des moyens (11,12) pour diriger lesdits écoulements des milieux et de matière à travers différentes parties du support en nids d'abeilles (17) et déplacer de façon cyclique ces écoulements entre les différentes parties du support en nids d'abeilles .

2. Un réacteur de catalyse selon la revendication 1 , caractérisé en ce que ledit support en nids d'abeilles (17) est monté libre en rotation pour rotation successive ou par étapes autour d'un axe de rotation (16) essentiellement parallèle auxdits passages de part en part (15) pour aligner lesdits passages successivement ou par étapes avec les différents passages d'alimentation et d'évacuation (11-12) pour lesdits écoulements des milieux de purge et de régénération et pour ledit écoulement de matière .

3. Un réacteur selon la revendication 1,2 ou 3, caractérisé en ce que lesdits passages d'alimentation et d'évacuation (11,12) sont formés approximativement en secteurs et disposés autour dudit axe de rotation (16).

4. Un réacteur selon la revendication 1,2 ou 3 , caractérisé en ce que les substances actives catalytiquement sont déposées sur les parois internes desdits passages de part en part (15) par la technique de dépôt par coulée .

5. Un procédé pour soumettre un écoulement de matière à un craquage catalytique , procédé dans lequel le craquage est exécuté en utilisant un réacteur de catalyse avec un catalyseur comprenant une ou plusieurs substances catalytiquement actives pour effectuer le craquage , et un support sou la forme d'une structure en nids d'abeilles (17) avec des passages de part en part(15) dans lesquels les substances catalytiquement actives sont déposées pour venir au contact dudit écoulement de matière pendant l'utilisation du réacteur , lesdits écoulements de purge et de régénération et ledit écoulement de matière sont dirigés à travers différentes parties dudit support en nids d'abeilles (17) et déplacés de façon cyclique entre les différentes parties dudit support en nids d'abeilles (17).

6. Un procédé selon la revendication 5 , caractérisé en ce que le support en nids d'abeilles (17) est mis en rotation de façon successive ou par étapes autour d'un axe de rotation (16) essentiellement parallèle aux passages de part en part (15) dudit support , pour aligner lesdits passages de façon successive ou par étape avec les passages d'alimentation et d'évacuation (11,12) pour lesdits écoulements des milieux de purge et de régénération et pour ledit écoulement de matière .

7. Un procédé selon la revendication 5 ou 6 , caractérisé en ce que lesdits passages d'alimentation et d'évacuation (11 ,12)sont formés approximativement en forme de secteur et disposés autour dudit axe de rotation (16).

8. Un procédé selon la revendication 5,6 ou 7 ,caractérisé en ce que les substances catalytiquement actives sont déposées sur les parois internes desdits passages de part en part (15) par la technique de dépôt par coulée.

**Ansprüche**

1. Reaktor für katalytisches Cracken mit einem Katalysator, der einen Träger und eine oder mehrere katalytisch wirksame Substanzen umfaßt, um das Cracken zu bewirken, wobei der Träger in Form eines wabenförmigen Körpers (17) mit Durchlässen (15) ist, worin die katalytisch aktive Substanz oder Substanzen abgelagert sind, um bei Verwendung des Reaktors in Kontakt mit einem Materialstrom, der dem Cracken unterworfen werden soll, zu kommen, der Reaktor Zufluß- und Abzugsleitungen (13,14) zum Spülen und Regenerieren der Mediumströme und für den Materialstrom hat, und Mittel (11,12) zum Leiten dieser Mediums- und Materialströme durch verschiedene Teile des wabenförmigen Körpers (17) und zyklisches Bewegen dieser Ströme zwischen den verschiedenen Teilen des wabenförmigen Körpers.

2. Katalytischer Reaktor gemäß Anspruch 1, dadurch gekennzeichnet, daß der wabenförmige Körper (17) zur aufeinanderfolgenden oder schrittweisen Drehung drehbar um eine Rotationsachse (16) im wesentlichen parallel zu diesen Durchgängen (15) montiert ist zum Lenken dieser sukzessiven oder schrittweisen Durchgänge mit den verschiedenen Zuführungs- und Abführungsleitungen (11-14) für diese Spül- und Regenerierungsmittelströme und für den Materialstrom.

3. Reaktor gemäß Anspruch 1, 2 oder 3, dadurch gekennzeichnet, daß die Zuführungs- und Abführungsleitungen (11,12) annähernd sektorgeformt und um diese Rotationsachse (16)-angeordnet sind.

4. Reaktor gemäß Anspruch 1, 2 oder 3, dadurch gekennzeichnet, daß die katalytisch aktiven Substanzen auf den Innenwänden der Durchgänge (15) durch Gleitüberziehungstechnik abgelagert sind.

5. Verfahren zum katalytischen Cracken eines Materialstroms, wobei das Cracken durchgeführt wird durch Verwendung eines katalytischen Reaktors mit einem Katalysator, umfassend eine oder mehrere katalytisch aktive Substanzen, um das Cracken zu bewirken, und einen Träger in Form eines wabenförmigen Körpers (17) mit Durchgängen (15), wobei die katalytisch aktiven Substanzen abgelagert sind, um in Kontakt mit dem Materialstrom während der Verwendung des Reaktors zu kommen, wobei diese Spülund Regenerierungsmediumsströme und der Materialstrom durch die verschiedenen Teile des wabenförmigen Körpers (17) gerichtet sind und zyklisch zwischen den verschiedenen Teilen des wabenförmigen Körpers (17) bewegt werden.

6. Verfahren gemäß Anspruch 5, dadurch gekennzeichnet, daß der, wabenförmige Körper (17) fortschreitend oder schrittweise um eine Rotationsachse (16), die im wesentlichen parallel zu den Durchgängen (15) dieses Körpers ist, rotiert, um diese Durchgänge fortschreitend oder stufenweise mit Zuführungs- und Abführleitungen (11, 12) für die Spülungs- und Regenerierungsmediumströme und für den Materialstrom auszurichten.

7. Verfahren gemäß Anspruch 5 oder 6, dadurch gekennzeichnet, daß diese Zuführungs- und Abführungsleitungen (11,12) etwa sektorähnlich geformt und um diese Rotationsachse (16) angeordnet sind.

8. Verfahren gemaß Anspruch 5, 6 oder 7, dadurch gekennzeichnet, daß die katalytisch aktiven Substanzen auf den, Innenwänden der Durchgänge (15) durch Gleitüberzugstechnik abgelagert sind.

Fig.1

Fig.2